# FASCICULE DE BREVET EUROPEEN

(11) **EP 2 196 003 B1**
(45) Date de publication et mention de la délivrance du brevet: **14.11.2018**
(21) Numéro de dépôt: 08838975.4
(22) Date de dépôt: 26.09.2008
(51) Int. Cl.: H04L 29/06

(54) **BASE DE DONNEES ET PROCEDE D'OBTENTION D'UNE ADRESSE D'UNE ENTITE DE CONTROLE DE LA QUALITE DE SERVICE ET DE LA FACTURATION DANS UN RESEAU IMS UTILISANT UNE TELLE BASE DE DONNEES**
DATENBANK UND VERFAHREN FÜR DEN ERHALT DER ADRESSE EINER EINHEIT ZUR STEUERUNG DER DIENST- UND ABRECHNUNGSQUALITÄT IN EINEM IMS-NETZ ANHAND EINER DERARTIGEN DATENBANK
DATABASE AND METHOD FOR OBTAINING THE ADDRESS OF AN ENTITY FOR CONTROLLING SERVICE AND BILLING QUALITY IN AN IMS NETWORK USING SUCH DATABASE

(30) Priorité: 28.09.2007 FR 0757962
(43) Date de publication de la demande: 16.06.2010
(73) Titulaire: Orange, 75015 Paris (FR)
(72) Inventeur: LATASTE, Sandrine, F-75012 Paris (FR); TSANG-KWONG-U, Steve, F-92190 Meudon (FR)
(74) Mandataire: Delumeau, François Guy
(86) Numéro de dépôt international: PCT/FR2008/051737
(87) Numéro de publication internationale: WO 2009/050395

(56) Documents cités:
- EP-A- 1 748 596
- WO-A-2007/090463
- US-A1- 2004 073 928
- US-A1- 2006 136 557
- "TS 23.203, Policy and charging control architecture, Release 7" 3RD GENERATION PARTNERSHIP PROJECT (3GPP); TECHNICALSPECIFICATION (TS), XX, XX, vol. 23.203, no. V0.3.1, 1 janvier 2006 (2006-01-01), pages 1-45, XP002408127
- "TR 23.803, evolution of policy control and charging, Release 7" 3RD GENERATION PARTNERSHIP PROJECT (3GPP); TECHNICAL REPORT (TR), XX, XX, vol. 23.803, no. V7.0.0, 1 septembre 2005 (2005-09-01), pages 1-30, XP002408128

## Description

### Arrière-plan de l'invention

L'invention se situe dans le domaine des réseaux de télécommunications conformes à l'architecture IMS (IP Multimedia Subsystem) définie par le 3GPP (Third Generation Partnership Project).

Le document US2004/073928 décrit un système et une méthode mettant en oeuvre une fonction de politique de contrôle (PCF) selon la version 5 des spécifications du 3GPP TR23-917 apte à fournir à une entité GGSN une information d'autorisation relative à une session MBMS.

La version 7 (Release 7) de l'IMS définit des entités PCRF (Policy and Charging Rules Function) pour le contrôle de la qualité de service et de la facturation. Lorsqu'un appel est établi sur le réseau IMS, une entité P-CSCF (Proxy Call Session Control Function) envoie au PCRF une requête pour communiquer des informations sur la session applicative, ces informations servant au PCRF pour prendre ultérieurement une décision de qualité de service QOS et de facturation lors de l'activation des ressources pour la session.

L'entité P-CSCF se comporte de ce point de vue comme une Fonction d'Application ("Application Function", AF), autrement appelée "Entité Applicative" dans le présent document.

Sur réception de cette requête le PCRF identifie les liens de transmission impactés par la session applicative et leur définit un ensemble de règles (Policy Rules).

Le document EP1748596 décrit une entité PCRF apte, dans un réseau visité, à obtenir des règles de facturation à partir d'un PCRF d'un réseau nominal pour permettre la facturation dans un contexte d'itinéraire (« roaming » en anglais).

La norme précitée suppose que le point de terminaison dans le plan de transport, à savoir la passerelle derrière laquelle le terminal accède au réseau IMS (l'entité GGSN, Gateway GPRS Support Node dans un réseau UMTS, l'entité PDG, Packet Data Gateway dans un réseau I-WLAN) sélectionne, lors de l'activation des ressources, le PCRF contacté par l'entité applicative AF au moment de l'établissement de la session.

La passerelle se comporte de ce point de vue comme une Fonction de mise en oeuvre de la politique de QOS et facturation ("Policy and Charging Enforcement Function", PCEF).

Plus précisément, les sections 6.2.2.1 et 6.2.2.3 du document TS23.203V7.3.0 indiquent des méthodes de sélection du PCRF, respectivement par la passerelle et par l'entité applicative AF :
- la passerelle utilise le PDN (Packet Data Network) et une information sur l'identité de l'utilisateur, par exemple le IMSI ou le MSISDN ; et
- l'entité applicative AF utilise l'adresse IP du terminal utilisateur ou une autre identité de ce terminal.

L'homme du métier comprendra qu'il est nécessaire que les informations utilisées par la passerelle d'une part et par l'entité applicative AF d'autre part, soient identiques ou bien synchronisées pour qu'elles contactent le même PCRF de façon certaine.

La norme actuelle ne permet pas de garantir cet état de fait. Une solution envisagée par certains constructeurs est d'utiliser l'adresse IP du terminal utilisateur comme critère de sélection du PCRF. Cette solution n'est pas satisfaisante puisqu'elle ne permet pas de sélectionner le même PCRF lorsque l'adresse IP du terminal utilisateur, vue par la passerelle, est différente de celle vue par l'entité applicative AF, notamment lorsque l'adresse réseau est masquée par l'utilisation d'un protocole de mobilité du type de Mobile IP.

Le document US 2006/136557 décrit le préambule de la revendication 1.

Le document WO 2007/090463 décrit une méthode visant à résoudre ce problème. Selon cette méthode, la passerelle sélectionne dans un premier temps un PCRF, puis la fonction applicative AF sélectionne l'un des PCRF disponibles sur la base de l'adresse IP assignée au terminal utilisateur. Si le PCRF sélectionné sert déjà le terminal (identifié par son adresse IP), alors ce PCRF est utilisé pour la session. Sinon, le PCRF sélectionné à tort renvoie un message d'erreur et la fonction applicative AF sélectionne un autre PCRF, toujours sur la base de l'adresse IP du terminal, jusqu'à obtenir celui qui sert effectivement le terminal.

Cette méthode ne garantit pas que la fonction applicative AF parvienne à sélectionner le PCRF choisi par la passerelle pour le cas où l'adresse IP du terminal vue par la passerelle et par l'entité applicative AF sont différentes. L'homme du métier comprendra que la sélection du PCRF étant basée sur l'adresse IP, cette méthode ne peut couvrir le cas où l'opérateur souhaite conserver le même PCRF dans des scénarios de mobilité dans lesquels l'utilisateur change d'adresse IP au cours d'une même session.

Par ailleurs et de façon non négligeable, cette méthode présente l'inconvénient d'impacter les performances globales du système, notamment dans les réseaux d'opérateurs déployant un nombre important de PCRF, puisque, comme il a été dit, la fonction applicative AF essaie systématiquement de sélectionner les PCRF potentiels jusqu'à trouver celui effectivement choisi par la passerelle.

### Objet et résumé de l'invention

La présente invention propose une solution qui ne présente pas les inconvénients précités.

L'invention repose sur l'utilisation d'une base de données accessible dans un réseau IMS, cette base de données comportant au moins un enregistrement comportant :
- un identifiant d'un terminal sur un plan de transport ;
- un identifiant de ce terminal sur un plan de signalisation ; et
- au moins une adresse d'une entité de contrôle de la qualité de service et de la facturation dans le réseau.

Une entité PCRF constitue notamment une entité de contrôle de la qualité de service et de la facturation au sens de l'invention. Par la suite, nous dénommerons une telle entité "entité PCRF", ou plus souvent "PCRF".

Une entité SPDF pour un réseau d'accès fixe constitue également une entité de contrôle de la qualité de service et de la facturation au sens de l'invention.

Dans une première variante de l'invention, la base de données est connectée à chaque passerelle et à chaque entité applicative AF du réseau de l'opérateur.

Le format de cette base de données est libre.

De même, le protocole utilisé par les passerelles et les entités applicatives AF pour interroger cette base de données est laissé au choix de l'opérateur.

Dans cette première variante de réalisation, les adresses des entités PCRF peuvent être stockées dans la base de données, soit en permanence, soit de façon temporaire.

La base de données contient, pour chaque abonné IMS, les données suivantes :
- un identifiant de l'utilisateur sur le plan de transport, par exemple son IMSI (International Mobile Subscriber Identifier) ou son MISDN (Mobile ISDN) ; et
- un identifiant de l'utilisateur sur le plan de la signalisation applicative, par exemple son identité privée ou l'identité publique de l'utilisateur IMS.

La base de données associe l'adresse de l'entité PCRF qui gère le terminal ayant ces deux identifiants.

De façon optionnelle, la base de données peut comporter, pour un utilisateur donné, une adresse de PCRF différente en fonction des types d'accès auxquels il a souscrit.

Lorsque la base de données comporte une adresse de PCRF temporaire, à savoir une adresse attribuée dynamiquement par la passerelle pour la durée d'une session, la base de données comporte en outre un identifiant de la session en cours.

L'homme du métier comprendra que l'identifiant de la session est obligatoire si l'opérateur souhaite sélectionner un PCRF à chaque session, mais inutile si l'opérateur utilise le même PCRF pour toutes les sessions d'un utilisateur.

Le stockage des PCRF présente plusieurs avantages.

Tout d'abord, l'opérateur centralise dans la base de données la gestion des PCRF de son réseau, une telle base étant plus facile à maintenir qu'une configuration locale de l'adresse des PCRF associée à chaque passerelle et chaque entité applicative AF.

L'opérateur peut, par ailleurs, dans le cas d'un stockage permanent modifier les affectations des PCRF à tout moment pour mieux répartir les utilisateurs sur les différents PCRF du réseau, par exemple lorsqu'un nouveau PCRF est introduit dans le réseau pour équilibrer le nombre d'utilisateurs par PCRF.

Dans une deuxième variante de réalisation de l'invention, la base de données selon l'invention est connectée directement à chacun des PCRF via une interface et un protocole laissés au choix de l'opérateur.

Cette base de données sert alors de relais entre le PCRF contacté lors de l'établissement d'une session et le PCRF contacté pour l'établissement des ressources pour cette même session. La base de données contient, pour une session, l'adresse de chaque PCRF, les sélections des PCRF se faisant indépendamment au niveau de l'entité applicative AF et au niveau de la passerelle. Ces sélections peuvent notamment se faire de façon aléatoire ou déterministe en tenant compte du type d'accès.

Dans cette solution, l'opérateur peut donc aussi configurer son réseau avec souplesse puisqu'il peut notamment raccorder des entités PCRF différentes pour des types d'accès différents (c'est-à-dire pour des types de passerelles différents).

Dans cette deuxième variante, les PCRF ne sont pas nécessairement connectés à toutes les passerelles et à toutes les fonctions applicatives AF dans le réseau de l'opérateur.

Dans cette variante de réalisation, la base de données contient, pour chaque abonné IMS, les données suivantes :
- un identifiant de l'utilisateur sur le plan de transport, à savoir une donnée permanente (par exemple son IMSI ou son MSISDN) ou une donnée temporaire, par exemple l'adresse IP de l'utilisateur dans le plan de transport;
- un identifiant de l'utilisateur sur le plan de signalisation applicative, à savoir une donnée permanente (par exemple une identité privée ou une identité publique de l'utilisateur IMS) ou une donnée temporaire (par exemple l'adresse IP de l'utilisateur dans le plan de signalisation applicative) ;
- l'adresse du PCRF sélectionnée par la passerelle; et
- l'adresse du PCRF sélectionnée par l'entité applicative AF.

Ces deux adresses sont les données temporaires valides pour le temps de la session.

La base de données comporte également l'identifiant de la session en cours, cette donnée temporaire étant, elle aussi, valide le temps de la session.

Optionnellement, les informations de service pour la session applicative en cours sont également enregistrées dans la base de données. Ces données temporaires sont, elles aussi, valides le temps de la session applicative.

Cette deuxième variante de réalisation s'applique de façon avantageuse lorsque l'identifiant de l'utilisateur sur le plan de transport et l'identifiant sur le plan de signalisation sont différents.

La base de données selon l'invention est en effet capable d'associer ces deux identifiants, soit parce que ces données sont statiques et stockées en permanence, soit parce que ces données sont dynamiques mais associées à une même session.

Les deux variantes fonctionnent y compris dans le cas dans lequel l'opérateur utilise, pour un même utilisateur, une adresse IP différente dans le plan de transport et dans le plan de signalisation applicative.

Elles fonctionnent en particulier en situation de mobilité, même si un terminal change de fonction applicative ou de passerelle et d'adresse IP au cours d'une session.

L'invention concerne également une passerelle et une entité applicative pouvant être utilisées dans la première variante de réalisation de l'invention lorsque l'adresse du PCRF est stockée de façon permanente.

Cette passerelle comporte des moyens de réception d'une requête d'établissement d'une session dans le plan de transport émise par un terminal pour accéder à un service IMS. Elle comporte également :
- des moyens d'envoi d'une requête à une base de données telle que définie précédemment, cette requête comportant au moins un identifiant du terminal sur un plan de transport; et
- des moyens d'obtention d'une adresse d'une entité de contrôle de la qualité de service et de la facturation dans le réseau en réponse à la requête.

L'entité applicative comporte des moyens de réception d'une requête d'établissement d'une session dans le plan de signalisation applicative émise par un terminal dans un réseau IMS. Elle comporte également :
- des moyens d'envoi d'une requête à une base de données telle que définie précédemment, cette requête comportant un identifiant du terminal sur un plan de signalisation;
- des moyens d'obtention d'une adresse d'une entité de contrôle de la qualité de service et de la facturation dans le réseau en réponse à la requête.

Dans un mode de réalisation, les requêtes précitées émises par la passerelle et par l'entité applicative AF comprennent également l'indication du type d'accès utilisé par le terminal.

Pour obtenir l'adresse d'une entité PCRF pour une session faisant intervenir un terminal, la passerelle et l'entité applicative selon l'invention envoient à la base de données selon l'invention une requête comportant un identifiant du terminal, respectivement sur le plan de transport et sur le plan de signalisation.

L'invention vise aussi une passerelle et une entité applicative pouvant être utilisées dans la première variante de réalisation lorsque l'adresse du PCRF est stockée de façon temporaire.

Plus précisément, cette passerelle comporte des moyens de réception d'une requête d'établissement d'une session émise par un terminal dans un réseau IMS. Elle comporte également :
- des moyens de sélection d'une entité de contrôle de la qualité de service et de la facturation dans le réseau ; et
- des moyens d'envoi d'un message d'activation de ressources à une base de données telle que définie précédemment, la requête comportant l'adresse de ladite entité sélectionnée, un identifiant dudit terminal sur un plan de transport et un identifiant de ladite session.

Ainsi, la passerelle sélectionne, par exemple de façon aléatoire ou en fonction d'un type d'accès au réseau par le terminal, un PCRF sur le réseau et envoie l'adresse de ce PCRF à la base de données pour mémorisation.

Dans un mode de réalisation, l'entité applicative, pour obtenir l'adresse de ce PCRF, envoie, à la base de données, une requête comportant l'identifiant du terminal sur le plan de signalisation et l'identifiant de la session. La base de données est capable de corréler l'identifiant de session reçu au niveau de la signalisation applicative par l'entité applicative AF avec l'identifiant de session reçu au niveau transport par la passerelle GW.

Dans un mode de réalisation particulier de la première variante de l'invention, la passerelle comporte également:
- des moyens d'envoi d'un message de relâche des ressources à une base de données telle que définie précédemment, la requête comportant un identifiant du terminal sur un plan de transport et un identifiant de la session. La base de données supprime alors l'adresse du PCRF et l'identifiant de la session pour le terminal.

Ce mode de réalisation est particulièrement avantageux lorsque l'adresse du PCRF est stockée de façon temporaire.

L'invention vise aussi une entité de contrôle de la qualité de service et de la facturation pouvant être utilisée dans la deuxième variante de réalisation, par exemple un PCRF ou un SPDF.

Cette entité comporte des moyens de réception d'une requête d'initialisation d'une session relative à un terminal. Elle comporte également des moyens d'envoi d'un message à une base de données telle que définie précédemment, le message comportant l'adresse de cette entité, un identifiant de la session et un identifiant du terminal.

Ainsi lorsqu'elle est contactée par une passerelle, l'entité PCRF ou SPDF selon l'invention contacte la base de données selon l'invention pour transmettre son adresse, l'identifiant du terminal dans le plan de transport et l'identifiant de la session. La base de données associe cette adresse de PCRF et cette session avec l'identifiant du terminal dans le plan de transport.

Et lorsqu'elle est contactée par une entité applicative AF, l'entité PCRF ou SPDF selon l'invention contacte la base de données selon l'invention pour transmettre son adresse, l'identifiant du terminal dans le plan de signalisation applicative et l'identifiant de la session et optionnellement des informations de session.

La base de données associe cette adresse de PCRF et optionnellement les informations de service pour cette session avec l'identifiant du terminal dans le plan de signalisation applicative. La base de données est capable de corréler l'identifiant de session reçu au niveau de la signalisation applicative par l'entité applicative AF avec l'identifiant de session reçu au niveau transport par la passerelle GW.

Les identifiants du terminal sont créés dans la base de données si ces identifiants ne sont pas permanents.

Deux options sont possibles dans le deuxième mode de réalisation de l'invention selon que l'opérateur souhaite stocker les informations de service soit au sein des PCRF, soit dans la base de données selon l'invention.

Dans un mode de réalisation particulier, l'entité de contrôle selon l'invention comporte :
- des moyens pour envoyer une requête à une base de données telle que définie précédemment, la requête comportant un identifiant de la session et un identifiant d'un terminal dans un plan de transport ; et
- des moyens pour obtenir des informations de service sur la session, soit directement à partir d'une réponse à la requête, soit en interrogeant une autre entité de contrôle de la qualité de service et de la facturation dont l'adresse est contenue dans une réponse à la requête.

Ces deux options permettent à l'opérateur de stocker les informations de service soit au sein des PCRF, soit dans la base de données selon l'invention. Lorsque les informations de service sont stockées dans un PCRF, la base de données peut, pour les communiquer à un second PCRF, soit les obtenir par elle-même auprès du premier PCRF (mode Proxy), soit fournir au deuxième PCRF l'adresse du premier PCRF (mode Redirect). Dans le mode Redirect, le premier PCRF contacte le deuxième PCRF pour obtenir les informations de service de la session, ce qui nécessite une interface entre les PCRF.

Dans un mode de réalisation de la deuxième variante de l'invention:
La passerelle comporte également des moyens d'envoi d'un message pour relâcher des ressources de la session à la base de données, la requête comportant un identifiant du terminal sur le plan de transport et un identifiant de la session.

L'entité applicative AF comporte également des moyens d'envoi d'un message pour relâcher des ressources de la session à la base de données, la requête comportant un identifiant du terminal sur le plan de signalisation applicative et un identifiant de la session.

La base de données supprime alors l'adresse du PCRF dans le plan de signalisation applicative et l'identifiant du terminal dans le plan de signalisation applicative si la donnée est temporaire, ainsi que les informations de service pour la variante où elles sont stockées dans la base de données.

L'invention concerne également un procédé d'obtention d'une adresse d'une entité de contrôle de la qualité de service et de la facturation dans un réseau IMS. Ce procédé comporte une étape d'envoi d'une requête à une base de données telle que définie précédemment, la requête comportant un identifiant de session et un identifiant d'un terminal.

Dans un mode particulier de réalisation, les différentes étapes du procédé d'obtention d'adresse sont déterminées par des instructions de programmes d'ordinateurs.

En conséquence, l'invention vise aussi un programme d'ordinateur sur un support d'informations, ce programme étant susceptible d'être mis en oeuvre dans un dispositif d'obtention d'adresse ou plus généralement dans un ordinateur, ce programme comportant des instructions adaptées à la mise en oeuvre des étapes d'un procédé d'obtention d'adresse que décrit ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy dise) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

### Brève description des dessins

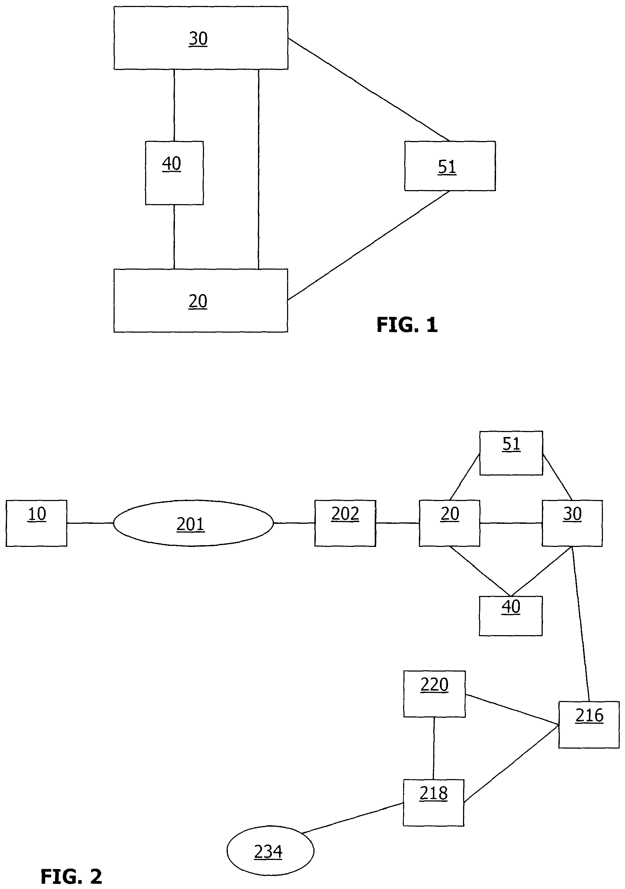

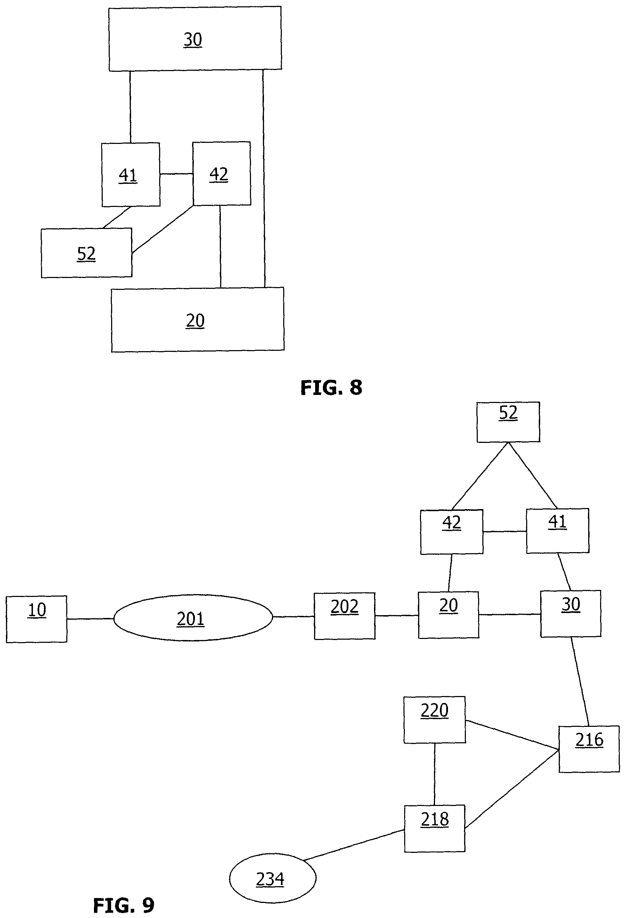

D'autres caractéristiques et avantages de la présente invention ressortiront de la description faite ci-dessous, en référence aux dessins annexés qui en illustrent un exemple de réalisation dépourvu de tout caractère limitatif. Les figures 1 à 7 illustrent une première variante de réalisation de l'invention et les figures 8 à 14 illustrent une deuxième variante de réalisation de l'invention.

Plus précisément :
- la figure 1 représente une passerelle et une entité applicative conformes à une première variante de l'invention dans leur environnement ;
- la figure 2 illustre cette première variante dans le contexte d'un réseau UMTS ;
- les figures 3 et 4 représentent des échanges de messages pour l'établissement d'une session (au niveau transport et au niveau applicatif respectivement) dans un premier mode de réalisation de la première variante selon l'invention ;
- les figures 5 et 6 représentent des échanges de messages pour l'établissement d'une session (au niveau transport et au niveau applicatif respectivement) dans un deuxième mode de réalisation de la première variante selon l'invention ; et
- la figure 7 représente un échange de messages pour la terminaison d'une session dans la première variante de réalisation dans le cas où les adresses des PCRFs sont stockées de façon temporaire dans la base de données selon l'invention;
- la figure 8 représente des entités de contrôle de la qualité de service et de la facturation PCRF conformes à une deuxième variante de réalisation de l'invention dans leur environnement ;
- la figure 9 illustre cette deuxième variante dans le contexte d'un réseau UMTS ; et
- les figures 10 à 14 représentent des échanges de messages pour l'établissement d'une session dans différents modes de réalisation de la deuxième variante de l'invention.

### Description d'une première variante de réalisation de l'invention (figures 1 à 7)

Sur la **figure 1****,** on a référencé :
- 20, une passerelle conforme à l'invention ;
- 30, une entité applicative AF conforme à l'invention ;
- 51, une base de données conforme à l'invention ; et
- 40, une entité de PCRF de l'état actuel de la technique.

Dans cette première variante de réalisation, la base de données 51 selon l'invention est accédée d'une part, par la passerelle 20 et, d'autre part, par l'entité applicative AF 30.

De façon connue :
- l'interface entre l'entité PCRF 40 et l'entité applicative AF 30 est une interface de type Rx ;
- l'interface entre l'entité PCRF 40 et la passerelle 20 est une interface de type Gx ; et
- l'interface entre l'entité applicative AF 30 et la passerelle 20 est une interface du type Gi/Wi.

La **figure 2** illustre un mode de réalisation de la première variante de l'invention dans le contexte d'un réseau UMTS.

Sur cette figure, un terminal 10 est attaché à un noeud SGSN (Serving GPRS Support Node 202) via un réseau UTRAN 201 qui, lui-même, est en communication avec la passerelle 20 selon l'invention, à savoir dans cet exemple une passerelle GGSN (Gateway GPRS Support Node).

La passerelle GGSN 20 selon l'invention communique avec une entité applicative 30 selon l'invention, à savoir ici une entité P-CSCF (Proxy-Call Session Control Function).

La passerelle GGSN 20 selon l'invention et l'entité P-CSCF 30 selon l'invention sont reliées, comme représenté à la figure 1, d'une part à une entité PCRF 40 et à une base de données 51 conforme à l'invention.

Dans le mode de réalisation décrit ici, l'entité P-CSCF 30 conforme à l'invention communique avec une entité I-CSCF 216 (Interrogating-Call Session Control Function), dont le but principal est d'interroger le serveur HSS 220 (Home Subscriber Server) pour identifier la localisation de l'entité S-CSCF 218 (Serving-Call Session Control Function) servant le terminal 10.

Cette entité 218 gère la session sur le réseau IMS et en particulier l'interface avec d'autres réseaux du type d'un réseau IP 234.

Pour plus d'informations sur l'architecture du réseau UMTS, on peut se reporter aux documents de spécifications de l'UMTS disponibles sur le site http//:www.3gpp.org, en particulier le document TS 23.228.

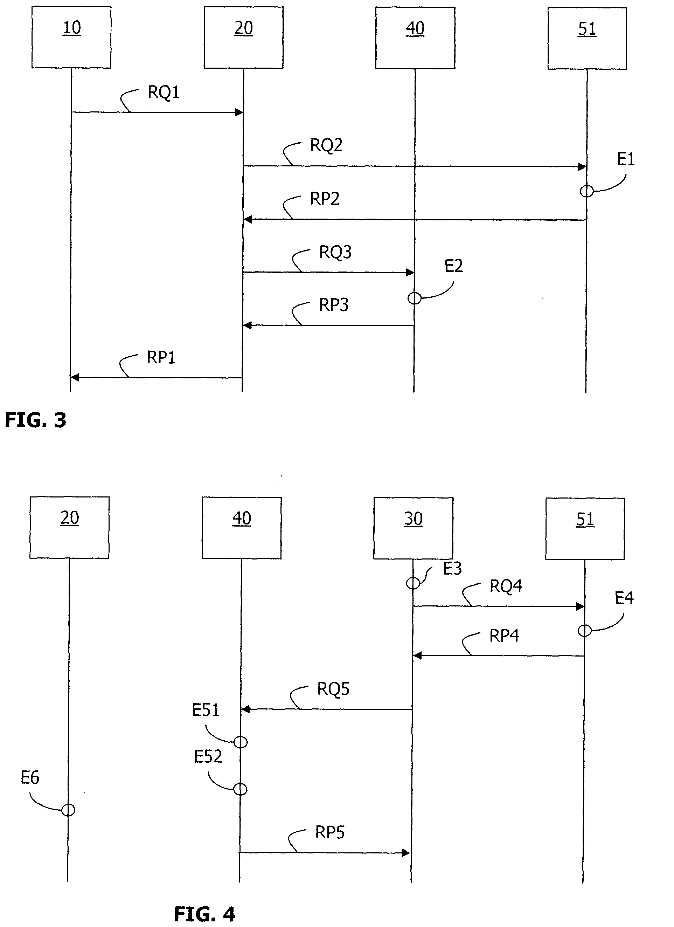

En référence, aux **figures 3 et 4****,** nous allons maintenant décrire des échanges de messages dans un mode de réalisation de la première variante de l'invention dans lequel l'adresse du PCRF 40 est stockée de façon permanente dans la base de données 51.

La figure 3 représente une adaptation de la procédure d'établissement de session IP-CAN défini par le document TS23.203 pour prendre en compte l'invention.

On suppose dans cet exemple que le terminal 10 envoie une requête RQ1 à la passerelle 20 selon l'invention pour établir un lien de transmission (par exemple, de signalisation). Ce message peut être du type *"IP-CAN Bearer Request".*

Sur réception de cette requête RQ1, la passerelle GGSN 20 conforme à l'invention envoie une requête RQ2 à la base de données 51 conforme à l'invention.

Cette requête comporte l'identifiant du terminal émetteur de la requête RQ1 sur le plan de transport et, optionnellement, le type d'accès de ce terminal au réseau IMS.

Sur réception de la requête RQ2, la base de données 51 conforme à l'invention recherche l'adresse de l'entité PCRF 40 associée à cet identifiant du terminal ou au couple (identifiant du terminal, type d'accès utilisé par le terminal).

Puis, la base de données 51 envoie un message RP2 en réponse à la requête RQ2, ce message RP2 comportant l'identifiant de l'utilisateur sur le plan de transport ainsi que l'adresse du PCRF 40.

L'établissement de la session se déroule ensuite de façon connue. En voici le résumé :
La passerelle GGSN 20 conforme à l'invention envoie une requête RQ3 au PCRF 40 dont elle a obtenu l'adresse précédemment, pour demander une prise de décision de qualité de service et facturation.

Sur réception de cette requête RQ3, l'entité 40 PCRF met en oeuvre une étape E2 de décision puis l'envoie dans une réponse RP3 à la passerelle 20.

L'homme du métier comprendra que la requête RQ3 peut être du type *"Indication of IP-CAN Session Establishment"* et que la réponse RP3 peut être du type *"Acknowledged IP-CAN Session Establishment"*

Sur réception de la réponse RP3, la passerelle 20 accepte la demande d'activation des canaux de transmission (par exemple le PDP Context en GPRS) et envoie une réponse RP1 au terminal 10 pour l'en notifier.

La figure 4 représente une modification de la procédure d'établissement de session AF défini par le document TS29.213 pour prendre en compte l'invention.

On considère qu'au cours d'une étape E3, l'entité applicative 30 AF conforme à l'invention reçoive du terminal 10 une demande pour établir une session, typiquement par l'envoi d'un message SIP Invite.

Sur réception de ce message, l'entité applicative 30 définit l'information de service nécessaire.

Conformément à ce mode de réalisation de l'invention, l'entité applicative AF 30 envoie une requête RQ4 à la base de données 51, cette requête comportant l'identifiant de l'utilisateur sur le plan de la signalisation applicative et éventuellement le type d'accès.

Au cours d'une étape E4, la base de données 51 recherche l'adresse de l'entité PCRF 40 dans la base de données 51 en fonction de l'identifiant de l'utilisateur et, éventuellement, du type d'accès.

Une fois cette adresse identifiée, la base de données 51 conforme à l'invention envoie une réponse RP4 à l'entité applicative 30, cette réponse comportant l'identifiant de l'utilisateur sur le plan de signalisation applicative et l'adresse de l'entité PCRF 40.

La suite de la procédure se déroule de façon connue de l'homme du métier.

En particulier, l'entité applicative 30 envoie une requête RQ5 à l'entité PCRF 40, à savoir, dans le mode de réalisation décrit ici, une requête AAR (Authorization Applicant Request) conforme au protocole Diameter.

Sur réception de cette requête, le PCRF 40 stocke les informations de service au cours d'une étape E51 puis identifie, au cours d'une étape E52, les sessions du plan de transport concernées.

Le PCRF peut alors interagir avec la passerelle 20 au cours d'une étape générale E6 pour envoyer les règles de QOS et facturation si le PCRF fonctionne en mode "push" (les interactions décrites précédemment en référence à la figure 3 s'appliquent après le message RFP5 lors de l'activation des ressources si le PCRF fonctionne en mode "pull").

Le PCRF 40 envoie un message de réponse PR5 à l'entité applicative 30, à savoir dans l'exemple décrit ici, une réponse Diameter AAA (Authorization Application Answer) conforme au protocole Diameter.

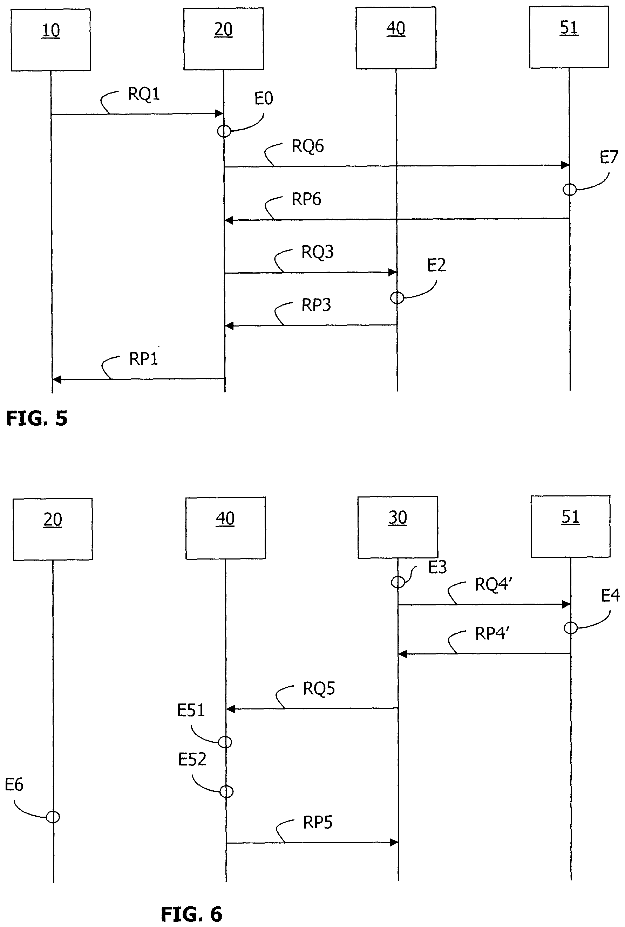

En référence aux **figures 5 et 6****,** nous allons maintenant décrire un mode de réalisation conforme à la première variante de l'invention dans lequel l'adresse du PCRF 40 est stockée temporairement dans la base de données 51.

Les figures 5 et 6 représentent respectivement une modification de l'établissement de session défini dans les documents TS 23.203 et TS.29.213 pour prendre en compte ce mode de réalisation.

Lorsque la passerelle 20 reçoit la requête RQ1 déjà décrite (requête d'établissement d'un lien de transmission pour la signalisation), elle sélectionne, au cours d'une étape E0, une entité PCRF du réseau. Cette sélection peut par exemple se faire de façon aléatoire.

Puis, la passerelle 20 envoie à la base de données 51 une requête RQ6 comportant l'identifiant de l'utilisateur sur le plan de transport, l'adresse du PCRF choisi à l'étape E0 et un identifiant de la session.

Dans le mode de réalisation décrit ici, la base de données 51 stocke, au cours d'une étape E7, l'adresse du PCRF et l'identifiant de la session.

Puis, la base de données 51 envoie une réponse RP6 à la passerelle 20, cette réponse comportant l'identifiant de l'utilisateur sur le plan de transport et l'identifiant de session.

L'établissement de la session se déroule ensuite comme de façon connue et est décrite précédemment en référence à la figure 3.

En référence à la **figure 6****,** lorsque l'entité applicative 30 AF reçoit la demande d'établissement de session (message SIP Invite), elle envoie une requête RQ4' à la base de données 51, cette requête comportant l'identifiant de l'utilisateur sur le plan de signalisation applicative, mais aussi l'identifiant de la session, celui-ci étant nécessaire puisque l'adresse du PCRF 40 est temporaire à cette session.

Comme décrit précédemment, la base de données 51 identifie, en utilisant ces informations, l'adresse du PCRF 40 et retourne, dans un message de réponse RP4', l'adresse du PCRF 40 accompagnée de l'identifiant de l'utilisateur sur le plan de signification applicative et l'identifiant de session à l'entité applicative 30.

La suite de la procédure d'établissement de session se déroule de façon connue comme décrite précédemment en référence à la figure 4.

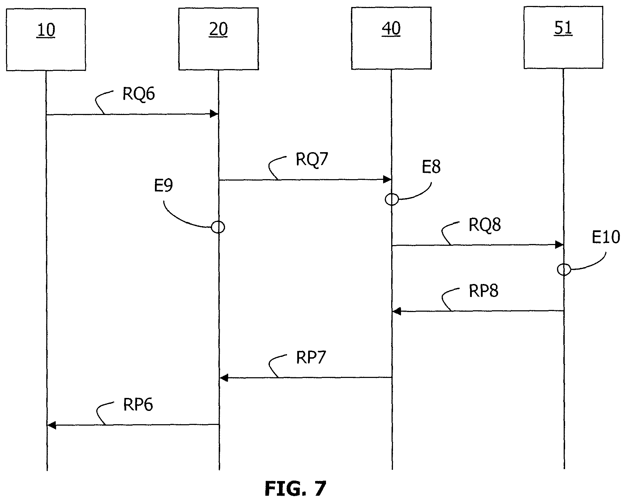

La **figure 7** représente des modifications qui peuvent être apportées à la procédure de terminaison de session IP-CAN telle que décrite dans le document TS29.213.

Nous supposerons ici que la passerelle 20 selon l'invention reçoit, du terminal 10, une requête RQ6 demandant la fin de la session. Cette requête RQ6 peut être du type *"Remove IP-CANBearer Request".*

De façon connue, la réception d'une telle requête RQ6 génère l'envoi d'un message d'indication RQ7 à destination du PCRF 40. Ce message RQ7 peut être du type *'Indication of IP-CAN Session Termination".*

De façon connue, au cours d'une étape E8, l'entité PCRF 40 identifie quelles sont les règles affectées par cette demande de terminaison. De son côté, au cours d'une étape E9, la passerelle détruit l'ensemble de ces règles.

Conformément à l'invention, l'entité PCRF 40 envoie une requête RQ8 à la base de données 51 pour lui demander de supprimer l'adresse du PCRF et l'identifiant de la session pour cet utilisateur.

Cette requête RQ8 comporte l'identifiant de l'utilisateur dans le plan de transport et l'identifiant de la session.

Une fois ces opérations effectuées, la base de données 51 envoie un message de réponse RP8 à la PCRF 40. De façon connue, le PCRF 40 envoie une réponse RP7 à la passerelle 20, cette réponse RP7 pouvant être un message du type *"Acknowledge IP-CAN Session Termination".*

Puis, la passerelle 20 acquitte, par l'envoi d'un message RP6, la requête RQ6 émise par le terminal 10, cette réponse RP6 pouvant être un message du type *"Remove IP-CAN Bearer Response".*

### Description d'une deuxième variante de réalisation de l'invention (figures 8 à 14)

La **figure 8** représente des entités de contrôle de la qualité de service et de la facturation PCRF 41, 42 conformes à une deuxième variante de réalisation de l'invention dans leur environnement.

Si on compare ces figures aux figures 1 et 2 décrites précédemment, on s'aperçoit que la base de données 52 conforme à l'invention est reliée directement aux entités PCRF 41 et 42 et que la passerelle 20 (GGSN) et l'entité applicative 30 (P-CSCF) utilisent chacune un PCRF différent 42, 41.

La **figure 9** illustre un mode de réalisation de la première variante de l'invention dans le contexte d'un réseau UMTS.

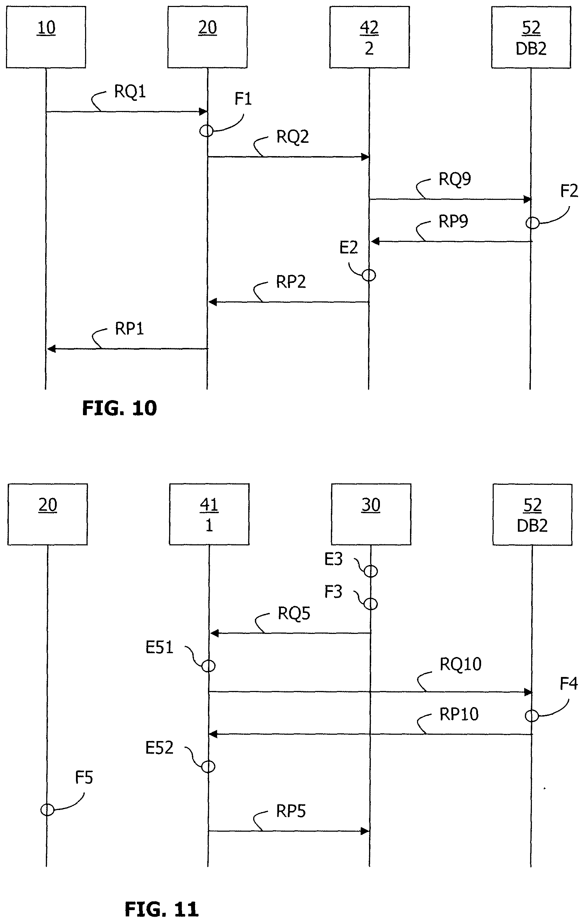

La **figure 10** représente une modification de la procédure d'établissement de session IP-CAN défini dans le document TS29.213 pour mettre en oeuvre cette deuxième variante de réalisation de l'invention.

Lorsque la passerelle 20 reçoit une requête RQ1 d'établissement d'un lien de transmission pour la signalisation, elle sélectionne, au cours d'une étape F1, une entité PCRF 42 dont elle stocke l'adresse en association avec l'identifiant de l'utilisateur et celui de la session.

Puis, la passerelle 20 envoie de façon connue une requête RQ2 d'indication de l'établissement d'une session à cette entité PCRF 42.

Dans cette variante de réalisation, l'entité PCRF 42 envoie une requête RQ9 à une base de données 52 conforme à l'invention, cette requête comportant l'identifiant de l'utilisateur dans le plan de transport, l'adresse de l'entité PCRF 42 et l'identifiant de la session.

Au cours d'une étape F2, la base de données 52 stocke l'adresse de l'entité PCRF 42, l'identifiant de la session pour l'utilisateur et l'identifiant de l'utilisateur dans le plan de transport si cette donnée n'est pas permanente.

Puis, la base de données 52 envoie un message de réponse RP9 à l'entité PCRF 42.

La suite de la procédure se déroule de façon classique (comme en figure 3).

En particulier, au cours d'une étape E2, l'entité PCRF 42 choisit sa politique de décision puis envoie un message RP2 à la passerelle 20 pour acquitter la requête RQ2.

La passerelle 20 envoie un message RP1 au terminal 10 pour acquitter la requête RQ1 d'établissement de session.

En référence à la **figure 11****,** on suppose que l'entité applicative 30 conforme à l'invention reçoit, au cours d'une étape E3, une demande d'établissement de session en provenance du terminal 10.

Sur réception de cette demande, l'entité applicative 30 définit les informations de service nécessaires puis sélectionne, au cours d'une étape F3, une entité PCRF 41 dont elle stocke l'adresse en association avec l'identifiant de l'utilisateur et celui de la session.

Puis, comme décrit précédemment (en figure 4), l'entité applicative 30 envoie une requête RQ5 à l'entité PCRF 41, à savoir, dans cet exemple, un message Diameter AAR.

Sur réception de cette requête, l'entité PCRF 41 mémorise les informations de service au cours d'une étape E51.

Conformément à ce mode de réalisation de l'invention, l'entité PCRF 41 envoie une requête RQ10 à la base de données 52, cette requête comportant l'adresse de l'entité PCRF 41, l'identifiant de l'utilisateur dans le plan de signalisation, l'identifiant de la session et, optionnellement, les informations de service.

Ces informations sont mémorisées par la base de données 52 au cours d'une étape F4 pour l'utilisateur et la session, sur réception de la requête RQ10, c'est-à-dire au minimum l'adresse du PCRF 41 (les informations de service étant optionnelles et l'identifiant de l'utilisateur pouvant être une donnée permanente déjà présente).

Puis la base de données 52 envoie un message RP10 à l'entité PCRF 41 pour acquitter la requête RQ10.

L'entité PCRF 41 peut, comme déjà décrit, identifier les sessions de plan de transport concernées au cours d'une étape E52.

Puis, au cours d'une étape générale F5, la passerelle 20 met en oeuvre les interactions décrites ci-dessus en référence à la figure 10.

Nous allons maintenant décrire le déroulement de l'invention dans cette deuxième variante de réalisation lorsque le terminal 10 fait une demande de réservation de ressource pour la session nouvellement établie.

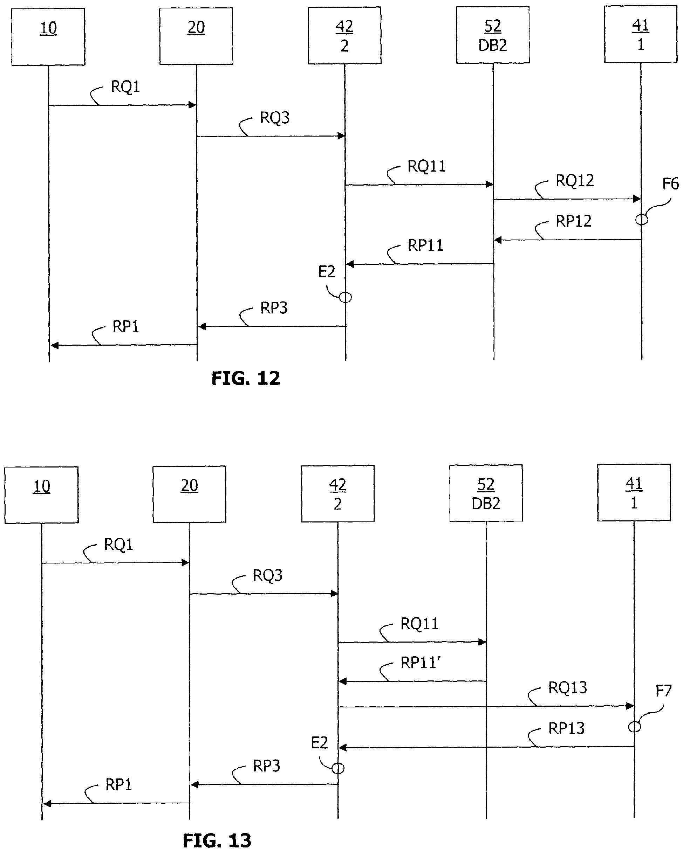

Dans cette deuxième variante de réalisation de l'invention, trois modes de réalisation sont envisagés et vont maintenant être décrits, respectivement en référence aux **figures 12, 13** **et** **14****.**

Dans les modes de réalisation des figures 12 et 13, les informations de service sont transmises au PCRF 42 depuis le PCRF 41, via la base de données DB 52 en figure 12 pour le mode "proxy" ou directement en figure 13 pour le mode "redirect".

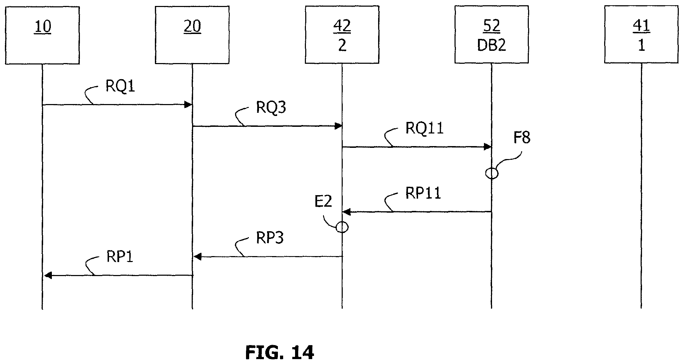

Dans le mode de réalisation de la figure 14, ces informations de service lui sont transmises depuis la base de données 52.

Ces trois modes de réalisation débutent de la même façon : le terminal 10 envoie une requête RQ1 de demande d'activation de ressource du type "Establish IP-CAN Bearer Request" à la passerelle 20 qui envoie une requête RQ3 à l'entité PCRF 42 du type *"Indication of IP-CAN Session Establishment".*

Sur réception de cette requête RQ3, l'entité PCRF 42 envoie une requête RQ11 à la base de données 52 en indiquant l'identifiant de l'utilisateur dans le plan de transport et l'identifiant de session pour obtenir les informations de service.

Cette requête est traitée différemment suivant le mode de réalisation prévu.

### 1. Mode Proxy (figure 12)

Dans ce mode de réalisation, la base de données 52 contacte le PCRF 41 en lui envoyant l'identifiant de l'utilisateur dans le plan de signalisation et l'identifiant de session dans sa requête.

Le PCRF 41, en mode dit pull, retrouve, au cours d'une étape F6, les informations de service pour cet utilisateur et cette session. Le PCRF 41 répond à la base de données 52 (message RP12) avec, dans sa réponse, les informations de service pour l'utilisateur et la session demandée.

La base de données 52 répond (message RP11) au PCRF 42 avec l'identifiant de l'utilisateur et les informations de service relatives à la session.

Dans un autre mode de réalisation (dans l'étape F5 de la figure 11), le PCRF-42 en mode dit push envoie spontanément une requête à la base de données 52 qui la redirige vers le PCRF-41.

### 2. Mode Redirect (figure 13)

Dans ce mode de réalisation, la base de données répond au PCRF 42 en lui indiquant l'adresse du PCRF 41 (message RP11'). Les PCRF 41 et 42 sont reliés entre eux.

Le PCRF 42, en mode dit pull, contacte le PCRF 41 (requête RQ13) en lui envoyant l'identifiant de l'utilisateur dans le plan de signalisation et l'identifiant de la session. Le PCRF 42 peut éventuellement stocker localement l'adresse du PCRF 41 liée à l'identifiant de l'utilisateur et l'identifiant de la session pour une utilisation future.

Au cours d'une étape F7, le PCRF 41 retrouve les informations de service pour cet utilisateur et les envoie au PCRF 42 dans une réponse RP13.

Dans un autre mode de réalisation, le PCRF-41 envoie spontanément, en mode dit push, au PCRF-42 les informations de service après avoir obtenu son adresse de la base de données.
Le PCRF-42 envoie spontanément une requête à la base de données 52.

### 3. Informations de service mémorisées dans la base de données 52 (figure 14)

Dans ce mode de réalisation, la base de données 52 retrouve elle-même (étape F8), les informations de service pour cet utilisateur et cette session. La base de données 52 répond au PCRF 42 avec l'identifiant de l'utilisateur et les informations de service relatives à la session (message RP11).

Dans les trois exemples décrits ici, le PCRF 42 obtient donc les informations de service demandées, soit du PCRF 41, soit de la base de données 52.

Quoi qu'il en soit, au cours d'une étape E2 déjà décrite, il établit sa politique de QOS et de facturation puis envoie un message RP3 du type *"Acknowleged IP-CAN Session Establishment"* en réponse à la requête RQ3.

La passerelle 20 peut envoyer un message RP1 du type *"Establish IP-CAN Bearer Response"en* réponse à la requête RQ1.

D'une façon similaire à ce qui a été décrit en référence à la figure 7, pour terminer une session IP-CAN, le PCRF 42 contacte la base de données 52 avec l'identifiant de l'utilisateur et l'identifiant de la session.

Pour la fin de la session sur le plan de transport, la base de données 52 supprime l'adresse du PCRF 42 pour l'utilisateur de la session. Elle supprime aussi l'identifiant de l'utilisateur sur le plan de transport si la donnée est temporaire.

De son côté, la passerelle 20 supprime l'identifiant de l'utilisateur, l'identifiant de la session et l'adresse du PCRF 2 qui ont été stockés pour la session.

Lorsque l'on est dans le mode Redirect décrit en référence à la figure 13, le PCRF 42 supprime l'identifiant de l'utilisateur, l'identifiant de la session et l'adresse du PCRF 41 si ces informations ont été stockées pour la session.

Pour terminer la session sur le plan de signalisation applicative, la base de données 52 supprime l'adresse de PCRF 41, le cas échéant, les informations de service pour l'utilisateur et la session.

La base de données 52 supprime aussi l'identifiant de l'utilisateur sur le plan de signalisation si la donnée est temporaire.

De son côté, l'entité applicative 30 supprime l'identifiant de l'utilisateur, l'identifiant de la session et l'adresse de l'entité PCRF 41 qui ont été stockées pour la session.

La passerelle 20 et l'entité applicative 30 décrites précédemment ont l'architecture matérielle d'un ordinateur conventionnel.

Elles comportent une mémoire ROM dans laquelle est stocké un programme d'ordinateur conforme à l'invention. Lorsqu'il est exécuté, ce programme met en oeuvre des instructions d'un procédé d'obtention d'une adresse conforme à l'invention.

Ce procédé comporte en particulier l'envoi d'une requête RQ2 respectivement RQ4 à la base de données 51, cette requête comportant au moins une donnée parmi un identifiant de session et un identifiant du terminal 10 dans le plan de signalisation ou dans le plan de transport et éventuellement le type d'accès.

La passerelle 20 et l'entité applicative 30 obtiennent de la base de données 51 l'adresse de l'entité PCRF 40 en réponse à leurs requêtes RQ2 respectivement RQ4.

L'entité PCRF 42 décrite précédemment a l'architecture matérielle d'un ordinateur conventionnel.

Elle comporte une mémoire ROM dans laquelle est stocké un programme d'ordinateur conforme à l'invention. Lorsqu'il est exécuté, ce programme met en oeuvre des instructions d'un procédé d'obtention d'une adresse conforme à l'invention.

L'entité PCRF 42 obtient de la base de données 52 l'adresse de l'entité PCRF 41 selon le mode redirect ou les informations de service en mode proxy en réponse à sa requête RQ11.

L'invention vise aussi une base de données accessible dans un réseau IMS comportant au moins un enregistrement comportant :
- au moins un identifiant d'une session dans le plan de transport;
- au moins une adresse d'une entité de contrôle de la qualité de service et de la facturation dans ledit réseau;
- des moyens pour renvoyer, sur réception d'une requête comprenant un identifiant de ladite session sur le plan de signalisation, ladite adresse de l'entité de contrôle.

L'identifiant de session peut être dans le plan de transport ou dans le plan de signalisation.

Cette base de données ne comporte pas d'identifiant de l'utilisateur.

Ce mode de réalisation n'a de sens que si l"utilisateur n'est pas en situation de mobilité.

## Revendications

1. Base de données (51, 52) accessible dans un réseau IMS comportant au moins une entité de contrôle de la qualité de service et de la facturation (40, 41, 42) dans ledit réseau, ladite base de données (51) pouvant être accédée par au moins une passerelle (20) et par au moins une entité applicative (30), ladite entité de contrôle de la qualité de service et de la facturation (40, 41, 42) dans ledit réseau comportant une interface avec ladite passerelle (20) et avec ladite entité applicative (30), ladite base de données étant **caractérisée en ce qu'**elle comporte au moins un enregistrement comportant:
- un identifiant d'un terminal (10) sur un plan de transport ;
- un identifiant dudit terminal (10) sur un plan de signalisation; et
- au moins une adresse d'une entité de contrôle de la qualité de service et de la facturation (40, 41, 42) dans ledit réseau, ladite base de données étant configurée:
- pour envoyer un message comportant ladite au moins une adresse d'une entité de contrôle de la qualité et de la facturation (40) à une passerelle (20) du réseau en réponse à une requête (RQ2) envoyée par ladite passerelle (20) et comportant un identifiant dudit terminal (10) sur ledit plan de transport; et pour
- envoyer un message comportant ladite au moins une adresse d'une entité de contrôle de la qualité de service et de la facturation (40) à une entité applicative (30) du réseau en réponse à une requête (RQ4) envoyée par ladite entité applicative (30) et comportant un identifiant dudit terminal sur ledit plan de signalisation.

2. Base de données selon la revendication 1, **caractérisée en ce que** ledit enregistrement comporte en outre un identifiant de session.

3. Base de données selon les revendications 1 ou 2, **caractérisée en ce que** ledit enregistrement comporte en outre des informations de service sur une session dans ledit réseau.

4. Base de données selon l'une quelconque des revendications 1 à 3, **caractérisée en ce qu'**elle comporte des moyens pour obtenir des informations de service sur une session dans ledit réseau en interrogeant une entité de contrôle de la qualité de service et de la facturation (41) dans ledit réseau.

5. Passerelle (20) comportant des moyens de réception d'une requête (RQ1) d'établissement d'une session au niveau transport émise par un terminal (10) dans un réseau IMS, **caractérisée en ce qu'**elle comporte:
- des moyens d'envoi d'une requête (RQ2) à une base de données (51) selon l'une quelconque des revendications 1 à 3, ladite requête comportant un identifiant dudit terminal (10) sur un plan de transport;
- des moyens d'obtention d'une adresse d'une entité de contrôle de la qualité de service et de la facturation (40) dans ledit réseau en réponse (RP2) à ladite requête (RQ2).

6. Entité applicative (30) comportant des moyens de réception d'une requête d'établissement d'une session émise par un terminal dans un réseau IMS, **caractérisée en ce qu'**elle comporte:
- des moyens d'envoi d'une requête (RQ4) à une base de données (51) selon l'une quelconque des revendications 1 à 3, ladite requête comportant un identifiant dudit terminal sur un plan de signalisation et ;
- des moyens d'obtention d'une adresse d'une entité de contrôle de la qualité de service et de la facturation (40) dans ledit réseau en réponse (RP4) à ladite requête (RQ4).

7. Passerelle (20) comportant des moyens de réception d'une requête (RQ1) d'établissement d'une session au niveau transport émise par un terminal (10) dans un réseau IMS, **caractérisée en ce qu'**elle comporte des moyens d'envoi d'un message d'activation de ressources (RQ6) à une base de données (51) selon l'une quelconque des revendications 1 à 3, ladite requête comportant l'adresse d'une entité de contrôle de la qualité de service et de la facturation (40) dans ledit réseau 1 un identifiant dudit terminal (10) sur un plan de transport et un identifiant de ladite session.

8. Passerelle selon la revendication 7, **caractérisée en ce qu'**elle sélectionne ladite entité, de façon aléatoire ou en fonction d'un type d'accès audit réseau par ledit terminal.

9. Entité applicative (30) selon la revendication 6, **caractérisée en ce que** lesdits moyens d'envoi d'une requête sont configurés pour envoyer une requête (RQ4') à une base de données (51) selon la revendication 2, ladite requête comportant en outre un identifiant de ladite session.

10. Entité de contrôle de la qualité de service et de la facturation (41, 42) dans un réseau IMS, comportant des moyens de réception d'une requête d1nitialisation d'une session relative à un terminal (10), **caractérisée en ce qu'**elle comporte des moyens d'envoi d'un message (RQ9, RQ10) à une base de données (52) selon l'une quelconque des revendications 1 à 3, ledit message comportant l'adresse de ladite entité (41,42), un identifiant de ladite session et un identifiant dudit terminal (10).

11. Entité de contrôle selon la revendication 10, **caractérisée en ce que** ledit message comporte en outre des informations sur ladite session.

12. Entité de contrôle selon les revendications 10 ou 11 **caractérisée en ce qu'**elle comporte:
- des moyens pour envoyer une requête (RQ11) à une base de données (52) selon l'une quelconque des revendications 2 à 3, ladite requête comportant un identifiant de ladite session et un identifiant d'un terminal (10) dans un plan de transport; et
- des moyens pour obtenir des informations de service sur ladite session, soit directement à partir d'une réponse (RP11) à ladite requête (RQ11), soit en interrogeant une autre entité de contrôle de la qualité de service et de la facturation (41) dont l'adresse est contenue dans une réponse (RP11) à ladite requête (RQ11).

13. Procédé d'obtention d'une adresse d'une entité de contrôle de la qualité de service et de la facturation dans un réseau IMS **caractérisé en ce qu'**il comporte une étape d'envoi d'une requête (RQ2) à une base de données (51) selon l'une quelconque des revendications 1 à 3, ladite requête comportant au moins un identifiant d'un terminal (10).

14. Programme d'ordinateur comportant des instructions pour l'exécution des étapes du procédé d'obtention selon la revendication 13 lorsque ledit programme est exécuté par un ordinateur.

15. Support d'enregistrement lisible par un ordinateur sur lequel est enregistré un programme d'ordinateur comprenant des instructions pour l'exécution des étapes du procédé d'obtention selon la revendication 13.

## Patentansprüche

1. Datenbank (51, 52), die in einem IMS-Netz zugänglich ist, das wenigstens eine Einheit zur Steuerung der Dienstgüte und Qualität der Rechnungsstellung (40, 41, 42) in dem Netz umfasst, wobei auf die Datenbank (51) über wenigstens ein Gateway (20) und über wenigstens eine applikative Einheit (30) zugegriffen werden kann, wobei die Einheit zur Steuerung der Dienstgüte und Qualität der Rechnungsstellung (40, 41, 42) in dem Netz eine Schnittstelle mit dem Gateway (20) und mit der applikativen Einheit (30) aufweist, wobei die Datenbank **dadurch gekennzeichnet ist, dass** sie wenigstens einen Eintrag umfasst, welcher umfasst:
- eine Kennung eines Endgerätes (10) auf einer Transportebene;
- eine Kennung dieses Endgerätes (10) auf einer Signalisierungsebene; und
- wenigstens eine Adresse einer Einheit zur Steuerung der Dienstgüte und Qualität der Rechnungsstellung (40, 41, 42) in dem Netz,
wobei die Datenbank dafür ausgelegt ist:
- eine Nachricht, welche die wenigstens eine Adresse einer Einheit zur Steuerung der Dienstgüte und Qualität der Rechnungsstellung (40) umfasst, an ein Gateway (20) des Netzes in Reaktion auf eine Anforderung (RQ2) zu senden, die von diesem Gateway (20) gesendet wurde und eine Kennung des Endgerätes (10) auf der Transportebene umfasst; und
- eine Nachricht, welche die wenigstens eine Adresse einer Einheit zur Steuerung der Dienstgüte und Qualität der Rechnungsstellung (40) umfasst, an eine applikative Einheit (30) des Netzes in Reaktion auf eine Anforderung (RQ4) zu senden, die von dieser applikativen Einheit (30) gesendet wurde und eine Kennung des Endgerätes auf der Signalisierungsebene umfasst.

2. Datenbank nach Anspruch 1, **dadurch gekennzeichnet, dass** der Eintrag außerdem eine Sitzungskennung umfasst.

3. Datenbank nach den Ansprüchen 1 oder 2, **dadurch gekennzeichnet, dass** der Eintrag außerdem Dienstinformationen über eine Sitzung in dem Netz umfasst.

4. Datenbank nach einem der Ansprüche 1 bis 3, **dadurch gekennzeichnet, dass** sie Mittel zum Gewinnen der Dienstinformationen über eine Sitzung in dem Netz durch Abfragen einer Einheit zur Steuerung der Dienstgüte und Qualität der Rechnungsstellung (41) in dem Netz umfasst.

5. Gateway (20), welches Mittel zum Empfang einer Anforderung (RQ1) zum Aufbau einer Sitzung auf der Transportebene, die von einem Endgerät (10) in einem IMS-Netz gesendet wurde, umfasst, **dadurch gekennzeichnet, dass** es umfasst:
- Mittel zum Senden einer Anforderung (RQ2) an eine Datenbank (51) nach einem der Ansprüche 1 bis 3, wobei diese Anforderung eine Kennung des Endgerätes (10) auf einer Transportebene umfasst;
- Mittel zur Gewinnung einer Adresse einer Einheit zur Steuerung der Dienstgüte und Qualität der Rechnungsstellung (40) in dem Netz in Reaktion (RP2) auf die Anforderung (RQ2).

6. Applikative Einheit (30), welche Mittel zum Empfang einer Anforderung zum Aufbau einer Sitzung, die von einem Endgerät in einem IMS-Netz gesendet wurde, umfasst, **dadurch gekennzeichnet, dass** sie umfasst:
- Mittel zum Senden einer Anforderung (RQ4) an eine Datenbank (51) nach einem der Ansprüche 1 bis 3, wobei diese Anforderung eine Kennung des Endgerätes auf einer Signalisierungsebene umfasst; und
- Mittel zur Gewinnung einer Adresse einer Einheit zur Steuerung der Dienstgüte und Qualität der Rechnungsstellung (40) in dem Netz in Reaktion (RP4) auf die Anforderung (RQ4).

7. Gateway (20), welches Mittel zum Empfang einer Anforderung (RQ1) zum Aufbau einer Sitzung auf der Transportebene, die von einem Endgerät (10) in einem IMS-Netz gesendet wurde, umfasst, **dadurch gekennzeichnet, dass** es Mittel zum Senden einer Nachricht zur Aktivierung von Ressourcen (RQ6) an eine Datenbank (51) nach einem der Ansprüche 1 bis 3 umfasst, wobei die Anforderung die Adresse einer Einheit zur Steuerung der Dienstgüte und Qualität der Rechnungsstellung (40) in dem Netz, eine Kennung des Endgerätes (10) auf einer Transportebene und eine Kennung der Sitzung umfasst.

8. Gateway nach Anspruch 7, **dadurch gekennzeichnet, dass** es die Einheit zufällig oder in Abhängigkeit von einem Typ des Zugangs zu dem Netz durch das Endgerät auswählt.

9. Applikative Einheit (30) nach Anspruch 6, **dadurch gekennzeichnet, dass** die Mittel zum Senden einer Anforderung dafür ausgelegt sind, eine Anforderung (RQ4') an eine Datenbank (51) nach Anspruch 2 zu senden, wobei die Anforderung außerdem eine Kennung der Sitzung umfasst.

10. Einheit zur Steuerung der Dienstgüte und Qualität der Rechnungsstellung (41, 42) in einem IMS-Netz, welche Mittel zum Empfang einer Anforderung zur Initialisierung einer Sitzung in Bezug auf ein Endgerät (10) umfasst, **dadurch gekennzeichnet, dass** sie Mittel zum Senden einer Nachricht (RQ9, RQ10) an eine Datenbank (52) nach einem der Ansprüche 1 bis 3 umfasst, wobei die Nachricht die Adresse der Einheit (41, 42), eine Kennung der Sitzung und eine Kennung des Endgerätes (10) umfasst.

11. Einheit zur Steuerung nach Anspruch 10, **dadurch gekennzeichnet, dass** die Nachricht außerdem Informationen über die Sitzung umfasst.

12. Einheit zur Steuerung nach Anspruch 10 oder 11, **dadurch gekennzeichnet, dass** sie umfasst:
- Mittel zum Senden einer Anforderung (RQ11) an eine Datenbank (52) nach einem der Ansprüche 2 bis 3, wobei diese Anforderung eine Kennung der Sitzung und eine Kennung eines Endgerätes (10) in einer Transportebene umfasst; und
- Mittel zum Gewinnen der Dienstinformationen über die Sitzung entweder direkt aus einer Antwort (RP11) auf die Anforderung (RQ11) oder durch Abfragen einer anderen Einheit zur Steuerung der Dienstgüte und Qualität der Rechnungsstellung (41), deren Adresse in einer Antwort (RP11') auf die Anforderung (RQ11) enthalten ist.

13. Verfahren zur Gewinnung einer Adresse einer Einheit zur Steuerung der Dienstgüte und Qualität der Rechnungsstellung in einem IMS-Netz, **dadurch gekennzeichnet, dass** es einen Schritt des Sendens einer Anforderung (RQ2) an eine Datenbank (51) nach einem der Ansprüche 1 bis 3 umfasst, wobei diese Anforderung wenigstens eine Kennung eines Endgerätes (10) umfasst.

14. Computerprogramm, welches Anweisungen zur Ausführung der Schritte des Verfahrens zur Gewinnung nach Anspruch 13, wenn das Programm von einem Computer ausgeführt wird, umfasst.

15. Computerlesbares Aufzeichnungsmedium, auf welchem ein Computerprogramm aufgezeichnet ist, das Anweisungen zur Ausführung der Schritte des Verfahrens zur Gewinnung nach Anspruch 13 umfasst.

## Claims

1. Database (51, 52) accessible in an IMS network including at least one entity (40, 41, 42) for managing quality of service and billing in said network, said database (51) being able to be accessed by at least one gateway (20) and by at least one application entity (30), said entity (40, 41, 42) for managing quality of service and billing in said network including an interface with said gateway (20) and with said application entity (30), said database being **characterized in that** it includes at least one record including:
- an identifier of a terminal (10) on a transport plane;
- an identifier of said terminal (10) on a signalling plane; and
- at least one address of an entity (40, 41, 42 for managing quality of service and billing in said network,
said database being configured:
- to send a message including said at least one address of an entity (40) for managing quality of service and billing to a gateway (20) of the network in response to a request (RQ2) sent by said gateway (20) and including an identifier of said terminal (10) on said transport plane; and to
- send a message including said at least one address of an entity (40) for managing quality of service and billing to an application entity (30) of the network in response to a request (RQ4) sent by said application entity (30) and including an identifier of said terminal on said signalling plane.

2. Database according to Claim 1, **characterized in that** said record furthermore includes a session identifier.

3. Database according to either of Claims 1 and 2, **characterized in that** said record furthermore includes service information regarding a session in said network.

4. Database according to any one of Claims 1 to 3, **characterized in that** it includes means for acquiring service information regarding a session in said network by interrogating an entity (41) for managing quality of service and billing in said network.

5. Gateway (20) including means for receiving a request (RQ1) to establish a session at the transport level sent by a terminal (10) in an IMS network, **characterized in that** it includes:
- means for sending a request (RQ2) to a database (51) according to any one of Claims 1 to 3, said request including an identifier of said terminal (10) on a transport plane;
- means for acquiring an address of a PCRF/SPDF entity (40) for managing quality of service and billing in said network in response (RP2) to said request (RQ2).

6. Application entity (30) including means for receiving a request to establish a session sent by a terminal in an IMS network, **characterized in that** it includes:
- means for sending a request (RQ4) to a database (51) according to any one of Claims 1 to 3, said request including an identifier of said terminal on a signalling plane and;
- means for acquiring an address of an entity (40) for managing quality of service and billing in said network in response (RP4) to said request (RQ4) .

7. Gateway (20) including means for receiving a request (RQ1) to establish a session at the transport level sent by a terminal (10) in an IMS network, **characterized in that** it includes means for sending a resources activation message (RQ6) to a database (51) according to any one of Claims 1 to 3, said request including the address of an entity (40) for managing quality of service and billing in said network, an identifier of said terminal (10) on a transport plane and an identifier of said session.

8. Gateway according to Claim 7, **characterized in that** it selects said entity randomly or depending on a type of access to said network by said terminal.

9. Application entity (30) according to Claim 6, **characterized in that** said means for sending a request are configured to send a request (RQ4') to a database (51) according to Claim 2, said request furthermore including an identifier of said session.

10. Entity (41, 42) for managing quality of service and billing in an IMS network, including means for receiving a request to initialize a session in relation to a terminal (10), **characterized in that** it includes means for sending a message (RQ9, RQ10) to a database (52) according to any one of Claims 1 to 3, said message including the address of said entity (41, 42), an identifier of said session and an identifier of said terminal (10).

11. Management entity according to Claim 10, **characterized in that** said message furthermore includes information regarding said session.

12. Management entity according to Claims 10 or 11, **characterized in that** it includes:
- means for sending a request (RQ11) to a database (52) according to either one of Claims 2 and 3, said request including an identifier of said session and an identifier of a terminal (10) in a transport plane; and
- means for acquiring service information regarding said session, either directly from a response (RP11) to said request (RQ11) or by interrogating another entity (41) for managing quality of service and billing whose address is contained in a response (RP11') to said request (RQ11).

13. Method for acquiring an address of an entity for managing quality of service and billing in an IMS network, **characterized in that** it includes a step of sending a request (RQ2) to a database (51) according to any one of Claims 1 to 3, said request including at least one identifier of a terminal (10).

14. Computer program including instructions for executing the steps of the acquisition method according to Claim 13 when said program is executed by a computer.

15. Computer-readable recording medium on which a computer program comprising instructions for executing the steps of the acquisition method according to Claim 13 is recorded.
